**Europäisches Patentamt**

**European Patent Office**

**Office européen des brevets**

(11) Publication number: **0 151 331**
**B1**

## (12) EUROPEAN PATENT SPECIFICATION

(45) Date of publication of patent specification: **13.06.90**

(21) Application number: **84300211.4**

(22) Date of filing: **13.01.84**

(51) Int. Cl.⁵: **H 04 N 13/04, H 04 N 9/31**

(54) Image projection apparatus.

(43) Date of publication of application:
**14.08.85 Bulletin 85/33**

(45) Publication of the grant of the patent:
**13.06.90 Bulletin 90/24**

(84) Designated Contracting States:
**DE GB NL**

(56) References cited:
**US-A-3 674 921**
**US-A-3 858 001**
**US-A-4 054 907**

**PROCEEDINGS OF THE IEEE, vol. 68, no. 5, May 1980, pages 548-564, IEEE, New York, US; T. OKOSHI: "Three-dimensional displays"**
**F&KT, Fernseh- und Kinotechnik, 37.Jahrgang, Heft 8/83, Seiten 321-328**

(73) Proprietor: **NEC HOME ELECTRONICS, LTD.**
**5-24, Miyahara 3-chome Yodogawa-ku**
**Osaka-Shi Osaka (JP)**

(72) Inventor: **Morishita, Masanobu**
**128 Tsutsujigaoka-haimu D-510**
**No. 13-3, Shibazaki 2-chome Chofu-shi (JP)**

(74) Representative: **Brunner, Michael John et al**
**GILL JENNINGS & EVERY 53-64 Chancery Lane**
**London WC2A 1HN (GB)**

Courier Press, Leamington Spa, England.

## Description

Background of the invention

The present invention relates generally to an image projection apparatus, and more particularly to a three-dimensional image displaying apparatus capable of displaying three-dimensional images on a screen.

With the advance of information transmission in the form of images, there has been a strong demand in recent years to display images on a large-size screen, and an image projection apparatus have been developed to meet such a demand. The image projection apparatus utilizes, for example, three cathode-ray tubes for producing three primary-color images and includes an optical system for projecting the primary-color images at an enlarged scale onto the screen so that an enlarged image is produced in color by combining the three primary-color images on the screen. In this image projection apparatus, the brightness of the displayed image is determined by the brightness of the image displayed on each cathode-ray tube, and it is difficult to obtain a bright image on a large screen. The prior art image projection apparatus, therefore, has a drawback in that the illumination in the room should be turned down for viewing.

Further, in a conventional three-dimensional image display apparatus, special eyeglasses have been required to view displayed images. According to one system, polarizers having directions of polarization displayed 90 degrees from each other are placed in front of two image display tubes for left and right eyes, the two images are combined with a half-silvered mirror, and the viewer views the combined image through eyeglasses having mutually orthogonal directions of polarization. In another system, one image display tube alternately displays images for left and right eyes in successive fields, and shutters are provided for alternately shielding the left and right eyes in synchronization with the alternate display of images. Still another system includes one image display tube for displaying the red and blue components of a color image and one for displaying the green component of the image, and eyeglasses are provided having a filter passing red and blue light for the left lens and a filter passing green light for the right lens. These three-dimensional television systems which require special eyeglasses are disadvantageous in that displayed images suffer from appreciable flickering and the viewer may suffer from eye fatigue after viewing such a display over a long period of time.

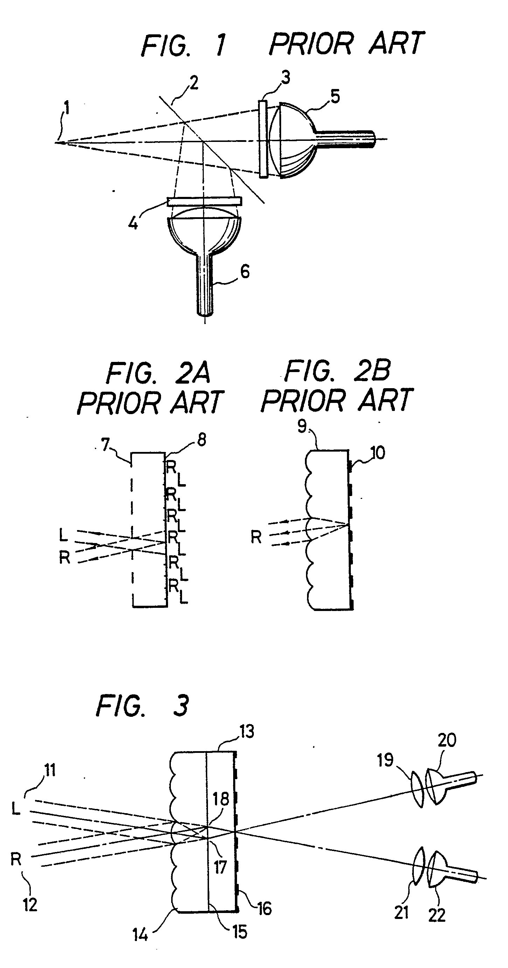

Figs. 1 and 2 of the accompanying drawings illustrate a three-dimensional image displaying apparatus which has been proposed to dispense with special eyeglasses. The illustrated system has been described by Takanori Ohkoshi, *Three-Dimensional Image Engineering*, Japan: Sangyo Tosho Co., Ltd., 1972, pp. 217, 218. In Fig. 1, images displayed by an image tube 5 for the left eye and an image tube 6 for the right eye are combined by a half-silvered mirror 2, and the combined image is viewed from a viewing point 1. A double-layer slit plate as shown in Fig. 2A, or a combining of a slit plate and a lenticular lens as shown in Fig. 2B, is placed in each of positions 3 and 4. With this arrangement, the right eye views an image on the tube 5 and the left eye views an image on the tube 6. Further in Figs. 2A and 2B, reference numerals 7 and 10 designate shield plates composed of vertical stripes, 8 indictes an image display surface, and 9 a lenticular lens. The construction of Fig. 2A is not preferable since images are divided into vertical stripes. The arrangement of Fig. 2B is somewhat better as it does not suffer from such problems. Both systems, however, have a drawback that since images are combined by a half-silvered mirror 2, the image position is far to the rear.

In still another known three-dimensional image displaying apparatus, the slit plate 7 shown in Fig. 2A or the lenticular lens 9 shown in Fig. 2B is placed immediately in front of a reflecting screen, and an image is projected onto the screen by two or more projectors. With two projectors, however, the range in which the images can be observed is small. One known screen capable of transmitting light therethrough has two lenticular lenses disposed back to back with a diffusion surface interposed therebetween. Such a screen is disclosed by Gen Yanagisawa, "History of Three-Dimensional Television and its Various Systems", *Graphics and Images*, Spring 1982, p. 86; see especially Figs. 21-a and 21-b. With this system, an image is projected from a projector onto a diffusion surface and the transmitted light is viewed. The difficulty with this system is that the range in which three-dimensional images can be viewed is small. Widening the viewing range requires many projectors and results in a system of large physical size.

Additionally, the article in Fernseh-und Kino-Technik, 37. Jahrgang, Heft 8/83, pages 321—328 discloses a very similar three-dimensional projected image apparatus wherein a pair of lenticular lenses are provided back-to-back, with a diffusion surface being sandwiched between the lenses. However, the image produced on the diffusion surface is very thin giving rise to a narrow field of view.

There is known a still further system, disclosed in Examined Japanese Patent Publication No. 57-11550, in which a special three-dimensional television picture tube is employed for displaying three-dimensional images. The picture tube required is, however, of a special and complex construction. US—A—3674921 discloses a three-dimensional television system wherein two sets of video signals representing left and right eye information are transmitted to a cathode ray tube.

Accordingly, it is an object of the invention to provide an image projection apparatus capable of producing bright three-dimensional images.

It is a further object of the invention to provide such an image projection apparatus in which the image can be viewed over a relatively wide range of viewing angles.

In accordance with a first aspect of the present invention, therefore, there is provided a projected image displaying apparatus for displaying three dimensional images comprising image source means and image displaying means the image source means optically projecting two-dimensional images onto the image displaying means the image displaying means comprising a transmissive diffusion surface onto which the images produced by the image source means are projected and a lenticular lens plate disposed on an opposite side of the transmissive diffusion surface from the image source means; characterised by:

a vertically striped shield plate disposed on a side of the transmissive diffusion surface adjacent to the image source means for projecting the images onto the transmissive diffusion surface in the form of overlapping, interleaved stripes.

According to a second aspect of the present invention, there is provided a projected image displaying apparatus for displaying three-dimensional images including image source means and image displaying means, the image source means optically projecting two-dimensional images onto the image displaying means, the image displaying means comprising a substrate capable of transmitting light therethrough and a fluorescent layer disposed on the substrate; characterised by:

a shield plate, spaced from the fluorescent layer in confronting relationship thereto and disposed on a side of the fluorescent layer adjacent to the image source means, having a plurality of striped apertures formed thereon.

In the drawings:—

Fig. 1 is a view showing the arrangement of a conventional three-dimensional television display apparatus;

Figs. 2A and 2B are, respectively, views of a slit plate and lenticular lens plate, placed directly in front of a display surface of the conventional display apparatus;

Fig. 3 shows a three-dimensional television display apparatus constructed according to a preferred embodiment of the present invention;

Fig. 4 is a perspective view of a screen for displaying three-dimensional images in the three-dimensional television display apparatus shown in Fig. 3;

Figs. 5 and 6 show modified screens for displaying three-dimensional images;

Fig. 7 shows a phosphor screen of a projection image tube constructed according to another embodiment of the present invention;

Fig. 8 is a set of views illustrating a three-dimensional image display apparatus for displaying colored three-dimensional images according to still another embodiment of the present invention;

Fig. 9 is a plan view of a projection television apparatus according to a further embodiment of the present invention;

Fig. 10 is a fragmentary enlarged cross-sectional view of a screen of the projection television apparatus shown in Fig. 9;

Fig. 11 is a fragmentary elevational view showing a screen according to still another embodiment;

Fig. 12 is a fragmentary cross-sectional view of a screen of the projection television apparatus according to a modification of the embodiment shown in Fig. 9 and 10;

Fig. 13 shows a modification of the screen shown in Fig. 12; and

Fig. 14A and 14B are fragmentary elevational view showing screens shown in Fig. 12 or 13.

Description of the preferred embodiments

The present invention will hereinafter be described in detail with reference to the drawings.

Figs. 1, 2A and 2B show a conventional three-dimensional television system as described above. The slit plate or lenticular lens plate as shown in Fig. 2A or 2B is placed in each of the positions 3 and 4 illustrated in Fig. 1. The surface 8 or 10 is positioned in overlapping relation to the image display surfaces of the image tubes 5 and 6. As mentioned above, the prior art system as illustrated is disadvantageous in that a displayed image appears positioned to the rear. Also, it may be mentioned that the screen is relatively dark since the viewer views only light that has been transmitted through the half-silvered mirror.

Fig. 3 is a view illustrative of the principles of a three-dimensional display apparatus according to a first preferred embodiment of the present invention. Designated at 11 is the position of the left eye of a viewer and at 12 the position of the right eye of the viewer. An image displayed by a projection image tube 20 is directed by a lens 19 to a shield plate 16 having vertical stripes. The image is then projected onto a diffusion surface 15. Similarly, an image displayed by a projection image tube 22 is directed by a lens 21 to the vertically striped shield plate 16, and is then projected onto the diffusion surface 15. The image for the left eye, which is produced by the projection image tube 20, is projected onto the diffusion surface 15 in the vicinity of an area 17 thereof, while the image for the right eye, which is produced by the projection image tube 22, is projected onto the diffusion surface 15 in the vicinity of an area 18 thereof, with the stripes of the two images being interleaved. The images having passed through the diffusion surface 15 are separated by a lenticular lens 14 into an image which can be viewed in the direction of the viewer's right eye 12 and an image which can be viewed in the direction of the viewer's left eye 11. More specifically, the image in the vicinity of the area 17 of the diffusion surface 15 is projected in the direction of the left eye 11 while the image in the vicinity of the area 18 of the diffusion surface 15 is projected in the direction of the right eye 12. Thus, the two images can be viewed as a three-dimensional image. The lenticular lens plate 14, the diffusion surface 15, and the vertically striped shield plate 16 jointly constitute a three-dimensional image screen 13.

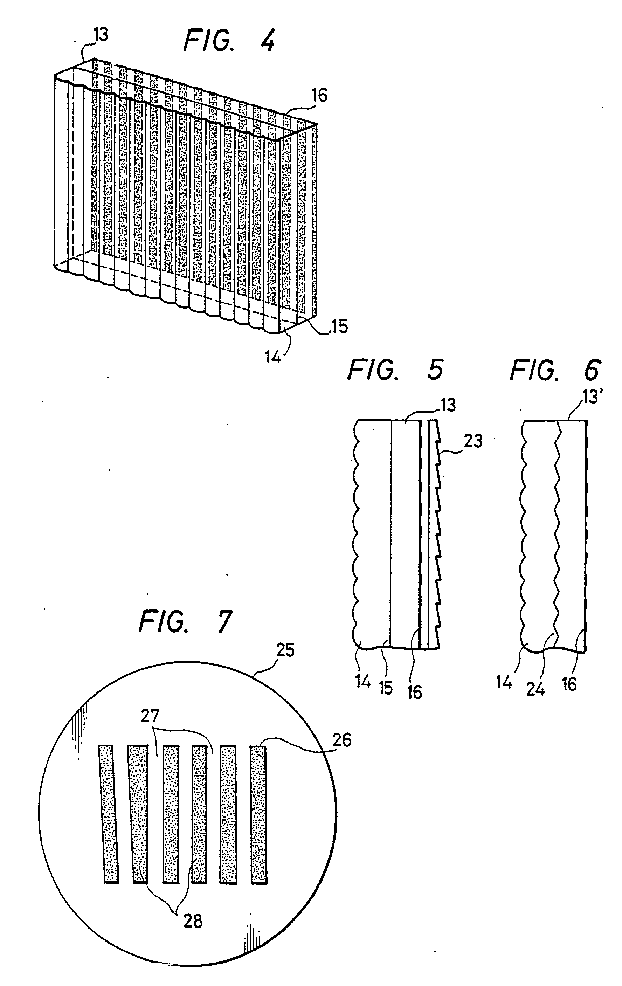

Fig. 4 is a perspective view showing the three-dimensional image screen 13 of Fig. 3 in greater detail.

With such an arrangement, the images from the projection image tubes 20 and 22 are projected onto the diffusion surface 15 as interleaved vertical stripes. The image stripes should preferably have some overlap. With this construction, the displayed three-dimensional image can be viewed even if the viewer moves laterally a small distance, and hence the range in which images can be seen is widened. When the viewer moves to the right, the three-dimensional image being viewed appears to be shifted to the left, and when the viewer moves to the left, the three-dimensional image being viewed appears to be shifted to the right, which is usually not objectionable.

With the construction of Fig. 3, if the screen 13 is relatively large in size, the image on the diffusion surface in lateral peripheral edge portions of the screen appears slightly shifted outwardly in position, and the incident angles of light rays emitted from the projection image tubes 20 and 22 falling on the screen in such lateral peripheral edge portions are angularly shifted. This reduces the quantity of light reaching the viewer, resulting in a so-called shading phenomenon. Such shading can be reduced by placing a Fresnel lens 23 (Fig. 5) in front of or behind the vertically striped shield plate 16. Fig. 5 shows the Fresnel lens 23 as being positioned in front of the shield plate 16.

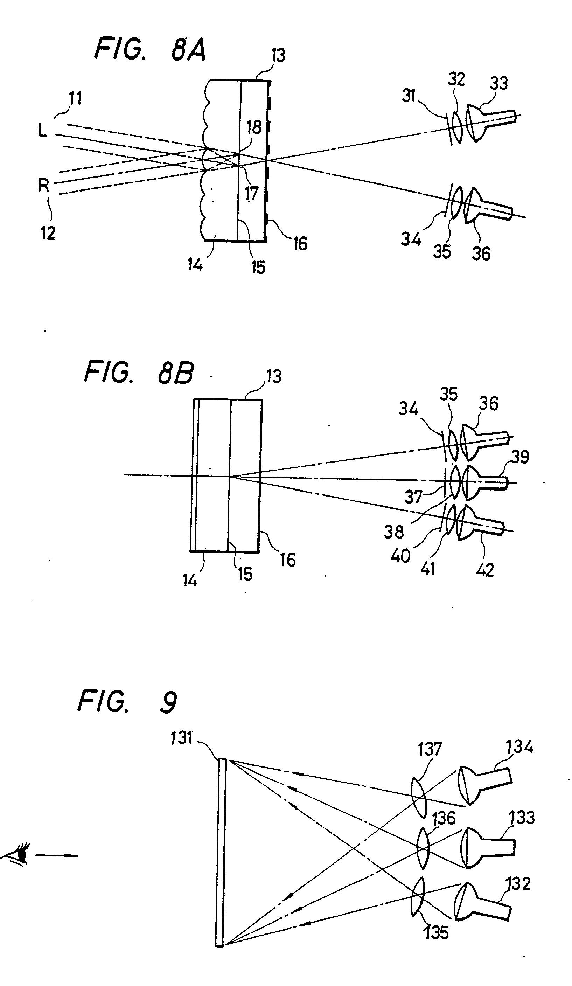

Fig. 6 illustrates a diffusion surface 24 arranged such that a displayed three-dimensional image will not appear inverted when it is viewed at in a lateral direction rather than head on. The arrangement of Fig. 6 has been proposed by Japanese Laid-Open Patent Publication No. 50-96228. Other proposals for preventing three-dimensional images from appearing inverted are disclosed in Examined Japanese Utility Model Publication No. 51-213 and Japanese Laid-Open Patent Publications No. 50-96227. The construction of the diffusion surface *per se*, however, is not part of the present invention.

Fig. 7 shows a three-dimensional image display apparatus according to another embodiment of the present invention. More specifically, Fig. 7 illustrates a phosphor screen 26 of a projection image tube corresponding to the projection image tube 20 or 22 shown in Fig. 3. While the phosphor screen illustrated in Fig. 3 emits light over its entire surface, the phosphor screen of Fig. 7 is composed of vertical stripes 28 which emit light separated by vertical stripes 27 which emit no light. This arrangement is effected by a uniform phosphor screen 26 and a vertically striped shield plate 25 positioned directly in front of the phosphor screen 26. Accordingly, a vertically striped image is produced. Images from the left-eye and right-eye image tubes are projected onto the diffusion surface 15 in overlapping interleaved stripes, as described before. With this embodiment, no shield plate 16 as shown in Figs. 3 and 4 is required.

Rather than placing the shield plate immediately in front of the phosphor screen 26 as shown in Fig. 7, a vertically striped electrode may be provided for shielding the electron beam falling on the phosphor screen 26. With such an arrangement, the portions indicated by 27 in Fig. 7 contain luminescent phosphor but emit no light. The manner in which images are projected onto the diffusion surface 15 remains as described above.

Any of the arrangements described above allow the viewer to observe a three-dimensional image at the viewing points 11 and 12.

The present invention is not to be interpreted as being limited to the foregoing embodiments, but includes various modifications. Three-dimensional images can be viewed in color by employing color image tubes instead of monochrome image tubes as the projection image tubes 20 and 22.

For achieving a three-dimensional color television display apparatus. it would be a simple matter to use color image tubes for the projection image tubes 20 and 22 shown in Fig. 3. However, no projection image tube is generally available at the present time which is capable of displaying images in colors.

Three-dimensional images can be displayed in color by the system shown in Figs. 8A and 8B. More specifically, the arrangement of Fig. 8A is similar to that of Fig. 3, but differs therefrom in that color filters 31 and 34 are added. Fig. 8A is a plan view of this system, while Fig. 8B is a side elevational view. As shown in Fig. 8B, a projection image tube 36 emits red light which is projected through a projection lens 35 and a red-pass filter 34 onto a diffusion surface 15. A projection image tube 39, a projection lens 38, and a green-pass filter 37 serve to project green light onto the diffusion surface 15. Likewise, a projection image tube 42, a projection lens 41, and a blue-pass filter 42 serve to project green light onto the diffusion surface 15. The projection image tubes and related components shown in Fig. 8B are used only for forming the right-eye image. A projection image tube 33, a projection lens 32, and a red-pass filter 31 illustrated in Fig. 8A serve to project red light onto the diffusion surface 15 for a left-eye image. Below the projection image tube 33, the projection lens 32, and the red-pass filter 31, there are provided similar components for projecting images of green and blue light for the left eye using the same arrangement as shown in Fig. 8B.

The vertically striped images of red, green and blue light in Fig. 8B are projected onto the transmissive diffusion surface 15, and the images of three colors in one set are overlapped as one vertical stripe image which appears as a colored image. The images thus formed appear as a colored three-dimensional image at the viewing points 11 and 12.

While the projection image tubes for red, green and blue light are arranged in Fig. 8B in the stated order in the vertical direction, the projection image tubes are not limited to such an order, and may be arranged in any other sequence. Also, the projection image tubes for the left and right eyes need not be arranged in the stated order, and may be in any desired sequence.

Schmidt optical systems including projection optics may be employed as the projection image tubes 20, 22, 33 and 36, 39, 42 as shown in Figs. 3 and 8. With a Schmidt system, the optical components 19, 21 and 32, 35, 38, 41 indicated in Figs. 3 and 8 may be dispensed with, and the shield plate placed directly in front of the phosphor screen surface doubles as an electrode plate for shielding the electron beam. The latter effect is due to the fact that the electron beam strikes the phosphor screen in the same direction with respect to the plane of the phosphor screen as that in which light is emitted from the phosphor screen.

While two projection image tubes are shown in Figs. 3 and 8, as many projection image tubes as desired may be disposed in the lateral direction, provided a plurality of such projection image tubes are included. The more projection image tubes, the greater will be the realisticness of the displayed three-dimensional images. As the number of projection image tubes is increased, the intervals between slits in the shield plate 16 should of course be correspondingly decreased to reduce the image overlap on the diffusion surface.

Fig. 9 is a side elevational view of a projection television apparatus according to the present invention. The projection television apparatus shown in Fig. 9 has a screen 131, cathode-ray tubes 132, 133 and 134 for displaying images in red, green, and blue, respectively, and the optical systems 135, 136 and 137 for projecting the color images displayed on the cathode-ray tubes 132, 133 and 134, respectively, onto the screen 131. The light rays representative of the color images projected onto the screen 131 have different incident angles.

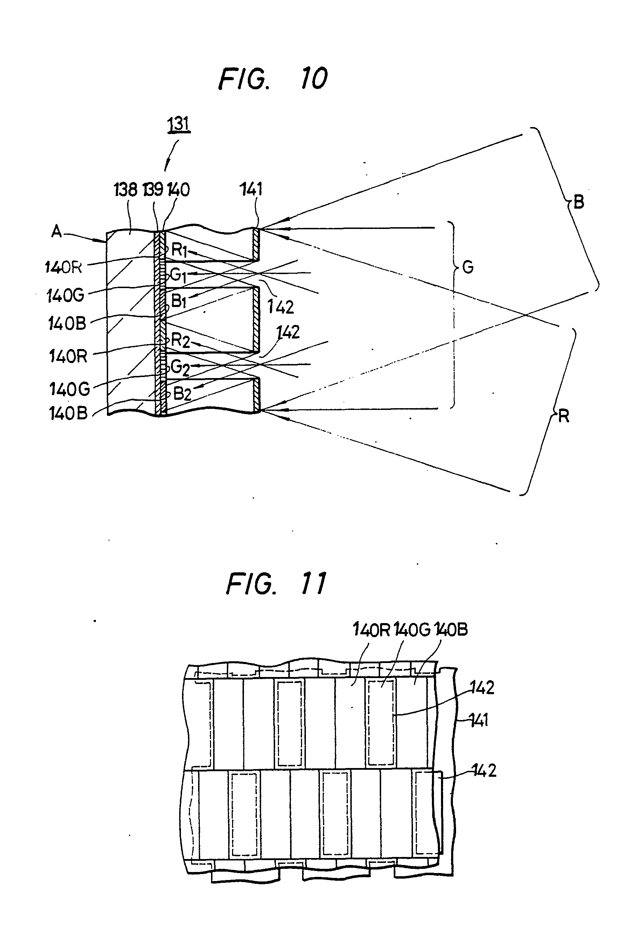

Fig. 10 is a fragmentary enlarged cross-sectional view of the screen 131 illustrated in Fig. 9. A substrate 138, which is made of glass or synthetic resin capable of transmitting light, has a surface A where a projected image is observed. The substrate 138 is coated on the entirety of its reverse side with a uniform light-diffusing layer 139 serving to mix colors well and thus enlarge the range in which images can be observed. A light-emitting layer 140 coated on the surface of the light-diffusing layer 139 is composed of repeating sequences of phosphor stripes 140R, 140G and 140B respectively emitting the three primary colors of light, that is, red, green, and blue. A shield plate 141 is spaced a predetermined distance from the light-emitting layer 140 in a confronting relation thereto. The shield plate 141 has a multiplicity of apertures 142 formed therein for guiding images projected from the cathode-ray tubes 132 to 134 shown in Fig. 9 as image projectors onto the phosphor stripes 140R, 140G and 140B so that the images will not overlap each other. Also, designated in Fig. 10, at R, G and B, are light rays of projected images in red, green and blue, respectively, which are generated from the cathode-ray tubes 132, 133 and 134 via their respective optical systems.

The projection television apparatus of the foregoing embodiment operates as follows. The red image produced by the cathode-ray tube 132 is projected by the optical system 135 onto the screen 131. Since the shield plate 141 is disposed in front of the light-emitting layer 140 of the screen 131, only a portion of the light rays R of the red image passes through the aperture 142 in the shield plate 141 and falls on the phosphor stripes 140R, as indicated by the arrows $R_1$ and $R_2$ in Fig. 10. As a result, the phosphor stripes 140R emit red light due to excitation by the light rays R of the red image. Likewise, the light rays G of the green image and the light rays B of the blue image are supplied from the cathode-ray tubes 133 and 134, respectively, and fall on the respective phosphor stripes 140G and 140B, passing through the apertures 142 in the shield plate 141. The phosphor stripes 140G and 140B are thus excited to emit green and blue light. Light rays in the three primaries thus emitted by the phosphor stripes 140R, 140G and 140B are diffused by the light diffusion layer 139 so as to be mixed together and enlarge the range in which the image can be observed. Thereafter, the light rays pass through the transmissive substrate 138 toward the viewer.

Accordingly, projected images can be displayed in color at a high brightness level by light rays of the respective image colors which are, in turn, produced by light rays (which may be visible light infrared or untraviolet radiation, for example) emitted from the cathode-ray tubes 142, 143 and 144 which excite the phosphor stripes 140R, 140G and 140B.

While in the foregoing embodiment the phosphor stripes 140R, 140G and 140B have been described as being arranged in stripes, the apertures 142 may be formed in the shield plate 141 in a staggered pattern as shown in Fig. 11 and the phosphor stripes 140R, 140G and 140B disposed in positions corresponding to the apertures 142. In such an arrangement, the quality of images displayed is improved since the three colors are well mixed. To increase the contrast of the displayed images, each of the phosphor stripes should be peripherally enclosed by a light-absorbing material such as carbon, or the viewing surface of the substrate 131 should be arranged such that it will absorb extraneous light falling thereon.

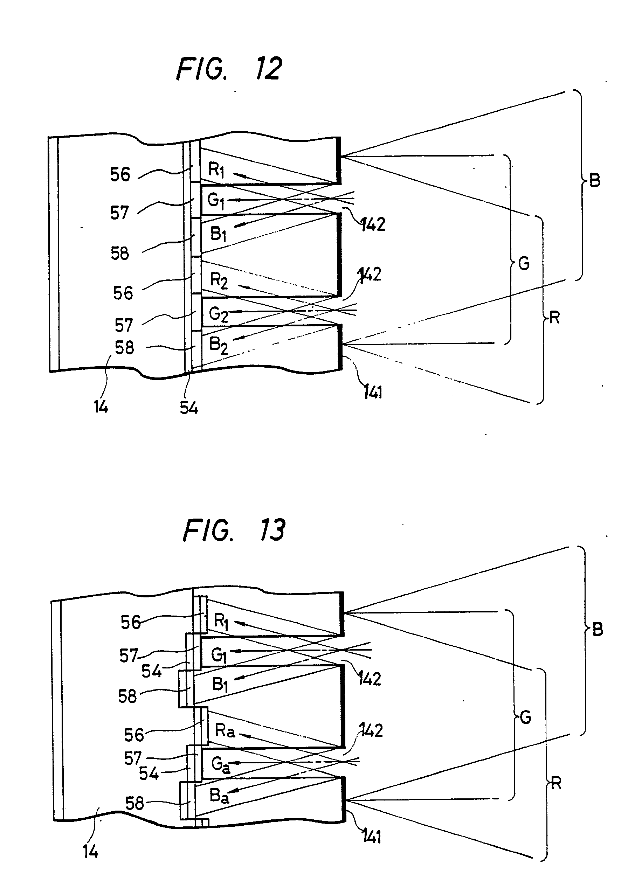

Fig. 12 is a cross-sectional view, similar to the view of Fig. 10, illustrating a screen which can be used in the three-dimensional displaying apparatus of Fig. 3. In this case, the image source may emit any of visible light, infrared light or ultraviolet light. Accordingly, stripes 56, 57 and 58 of fluorescent material for emitting red, green and blue light, respectively are disposed on the face of a base of substrate adjacent the shield plate 141. A diffusion layer 54 or the like is disposed under the fluorescent stripes 56, 57 and 58. As in the case of Fig. 3, a lenticular lens is provided.

Fig. 13 shows a modification of the screen of Fig. 12 in which the light-emitting portions for each of red, green and blue are offset in the longitudinal direction with respect to one another. The purpose for the relative offsets is to compensate for differences in wavelengths among the red, green and blue light. More particularly, the radius of the curvature of the lenticular lens is constant at any portion thereon, but the wavelength of the image portions in the three different primary colors are different, so that the reflective index of the lenses different for these three colors, thereby producing a displacement of the three images. Such displacement is compensated for with the arrangement of Fig. 13.

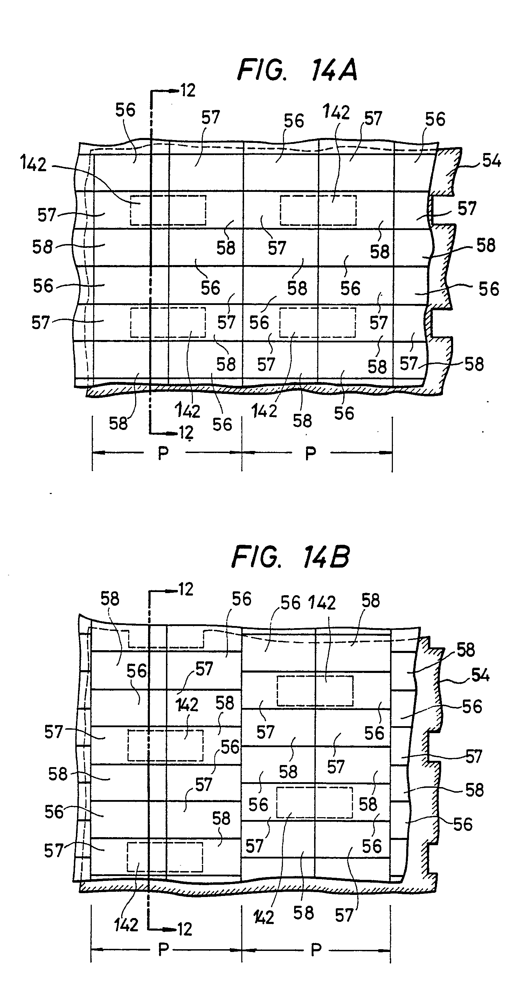

Finally, Figs. 14A and 14B are front views of a screen of the type of Figs. 12 or 13. In the case of Fig. 14A, the light-emitting stripes 56, 57 and 58 are arranged in a regular rectangular pattern, while in the arrangement of Fig. 14B, an offset is provided between pairs of two adjacent columns of the stripes.

With the projection television apparatus of the present invention as described above, images in the three primary colors are displayed by three respective cathode-ray tubes, and light rays representative of such images are projected from different positions through apertures in a shield plate onto corresponding light-emitting portions of phosphor stripes which constitute a screen, thereby causing the phosphor stripes to display a color image which can be directly observed. Therefore, the displayed image is much brighter than in a conventional device.

## Claims

1. A projected image displaying apparatus for displaying three dimensional images comprising image source means (19, 20, 21, 22) and image displaying means (13), the image source means (19, 20, 21, 22) optically projecting two-dimensional images onto the image displaying means (13), the image displaying means (13) comprising a transmissive diffusion surface (15) onto which the images produced by the image source means are projected and a lenticular lens plate (14) disposed on an opposite side of the transmissive diffusion surface (15) from the image source means (19, 20, 21, 22); characterised by:
a vertically striped shield plate (16, 25) disposed on a side of the transmissive diffusion surface (15) adjacent to the image source means (19, 20, 21, 22) for projecting the images on to the transmissive diffusion surface in the form of overlapping, interleaved stripes.

2. Projected image displaying apparatus according to claim 1, wherein the image source means (19, 20, 21, 22) comprises a plurality of image sources (20, 22) each projecting a two-dimensional image onto the transmissive diffusion surface (15) in a predetermined wavelength range of visual light.

3. Projected image displaying apparatus according to claim 1, wherein the image source means (19, 20, 21, 22) comprises a plurality of image sources for projecting two-dimensional monochrome images onto the transmissive diffusion surface (15) within a wavelength range of visual light, wherein three-dimensional images are composed on the transmissive diffusion surface (15).

4. Projected image displaying apparatus according to claim 1, wherein the image source means (19, 20, 21, 22) comprises a plurality of pairs of three image sources (31—42), each of the three image sources projecting images in respective red, green and blue colors onto the transmissive diffusion surface (15), three-dimensional images being composed on the transmissive diffusion surface (15).

5. Projected image displaying apparatus according to claim 2 or claim 4, further comprising a Fresnel lens (23) disposed adjacent the shield plate (16) on a side of the shield plate (16) adjacent the image source means.

6. Projected image displaying apparatus according to claim 2 or claim 4, wherein the shield plate (16) and the lenticular lens plate (14) have a zig-zag interface having a pitch equal to the pitch of stripes on the shield plate (16).

7. Projected image displaying apparatus according to claim 1, wherein the image source means comprises a plurality of projection image tubes and lens means for focusing images produced by the projection image tubes onto the diffusion surface through the shield plate, the shield plate being positioned to provide on the diffusion surface images from the projection image tubes in a form of vertically oriented stripes with stripes of images corresponding to each of the projection image tubes being interleaved with one another.

8. A projected image displaying apparatus for displaying three-dimensional images including image source means (132—137) and image displaying means (131), the image source means optically projecting two-dimensional images onto the image displaying means, the image displaying means (131) comprising a substrate (138) capable of transmitting light therethrough and a fluorescent layer (140) disposed on the substrate (138); characterised by:
a shield plate (141), spaced from the fluorescent layer in confronting relationship thereto and disposed on a side of the fluorescent layer (140) adjacent to the image source means, having a plurality of striped apertures (142) formed therein.

9. Projected image displaying apparatus according to claim 8, wherein the image displaying means (131) further comprises a lenticular lens plate disposed on an opposite side of the substrate (138) from image source means (132—137).

## Patentansprüche

1. Bildprojektionsgerät zur Anzeige von dreidimensionalen Bildern, welches ein Bilderzeugungseinrichtung (19, 20, 21, 22) und eine Bildanzeigeeinrichtung (13) aufweist, wobei die Bilderzeugungseinrichtung (19, 20, 21, 22) zweidimensionale Bilder optisch auf die Bildanzeigeeinrichtung (13) projeziert, welche eine durchscheinende Diffusionsoberfläche (15), auf welche die von der Bilderzeugungseinrichtung (19, 20, 21, 22) erzeugten Bilder projeziert werden und eine Lentikular-Linsenplatte (14) aufweist, die auf der der Bilderzeugungseinrichtung (19, 20, 21, 22) gegenüberliegenden Seite der durchscheinenden Diffusionsoberfläche (15) angeordnet ist, gekennzeichnet durch eine vertikal gestreifte Abschirmplatte (16, 25) welche auf einer Seite der durchscheinenden Diffusionsoberfläche (15) benachbart der Bilderzeugungseinrichtung (19, 20, 21, 22) angeordnet ist zur Projektion der Bilder auf die durchscheinende Diffusionsoberfläche (15) in Form überlappender verschachtelter Streifen.

2. Bildprojektionsgerät nach Anspruch 1, dadurch gekennzeichnet, daß die Bilderzeugungseinrichtung (19, 20, 21, 22) eine Mehrzahl von Bildquellen (20, 22) aufweist, welche jeweils ein zweidimensionales Bild auf die durchscheinende Diffusionsoberfläche (15) in einem vorbestimmten Wellenlängenbereich des sichtbaren Lichtes projeziert.

3. Bildprojektionsgerät nach Anspruch 1, dadurch gekennzeichnet, daß die Bilderzeugungseinrichtung (19, 20, 21, 22) eine Mehrzahl von Bildquellen aufweist zur Projektion zweidimensionaler monochromer Bilder auf die durchscheinende Diffusionsoberfläche (15) innerhalb eines Wellenlängenbereiches des sichtbaren Lichtes, wobei auf der durchscheinenden Diffusionsoberfläche (15) dreidimensionale Bilder zusammengesetzt werden.

4. Bildprojektionsgerät nach Anspruch 1, dadurch gekennzeichnet, daß die Bilderzeugungseinrichtung (19, 20, 21, 22) eine Mehrzahl von Paaren dreier Bildquellen (31—42) aufweist, wovon jede der drei Bildquellen Bilder in jeweils rotor, grüner und blauer Farbe auf die durchscheinende Diffusionsoberfläche (15) projeziert, wobei dreidimensionale Bilder auf der durchscheinenden Diffusionsoberfläche (15) gebildet werden.

5. Bildprojektionsgerät nach Anspruch 2 oder 4, dadurch gekennzeichnet, daß eine Fresnellinse (23) benachbart der Abschirmplatte (16) auf der der Bilderzeugungseinrichtung benachbarten Seite der Abschirmplatte (16) angeordnet ist.

6. Bildprojektionsgerät nach Anspruch 2 oder 4, dadurch gekennzeichnet, daß die Abschirmplatte (16) und die Lentikular-Linsenplatte (14) eine Zickzack-Zwischenschicht aufweist mit einer Stufenweite, welche gleich der Stufenweite der Streifen der Abschirmplatte (16) ist.

7. Bildprojektionsgerät nach Anspruch 1, dadurch gekennzeichnet, daß die Bilderzeugungseinrichtung eine Mehrzahl von Bildprojektionsröhren und Linseneinrichtungen zur Fokussierung der Bilder aufweist, welche von den Bildprojektionsröhren auf der Diffusionsoberfläche über die Abschirmplatte erzeugt werden, wobei die Abschirmplatte so angeordnet ist, daß auf der Diffusionsoberfläche Bilder der Bildprojektionsröhren in Form vertikal orientierter Streifen gebildet werden und wobei die Bildstreifen, welche mit jeder der Bildprojektionsröhren korrespondieren, miteinander verschachtelt sind.

8. Bildprojektionsgerät zur Abbildung dreidimensionaler Bilder mit einer Bilderzeugungseinrichtung (132—137) und mit einer Bildabbildungseinrichtung (131), wobei die Bilderzeugungseinrichtung zweidimensionale Bilder optisch auf die Bildabbildungseinrichtung (131) projeziert, welche ein Substrat (138), durch welches Licht hindruchscheinen kann und eine auf dem Substrat (138) aufgebrachte Fluoreszenz-Schicht (140) aufweist, gekennzeichnet durch eine Abschirmplatte (141), welche von der Fluoreszenz-Schicht (140) in gegenübergestellter Weise beabstandet ist, welche auf einer Seite der Fluoreszenz-Schicht (140) angeordnet ist, die der Bilderzeugungseinrichtung (132—137) benachbart ist und welche eine Mehrzahl streifenförmiger Öffnungen (142) aufweist.

9. Bildprojektionsgerät nach Anspruch 8, dadurch gekennzeichnet, daß die Bildabbildungseinrichtung (131) ferner eine Lentikular-Linsenplatte aufweist, welche auf der der Bilderzeugungseinrichtung (132—137) gegenüberliegenden Seite des Substrates (138) angeordnet ist.

**Revendications**

1. Dispositif projecteur d'image pour l'affichage d'images tri-dimensionnelles comportant des moyens de source d'image (19, 20, 21, 22) et des moyens d'affichage d'image (13), les moyens de source d'image (19, 20, 21, 22) effectuant la projection optique d'images bi-dimensionnelles sur les moyens d'affichage d'image (13) ayant une surface transmissive de diffusion (15) sur laquelle sont projetées les images produites par les moyens de source d'image et une plaque de lentille lenticulaire (14) disposée par rapport aux moyens de source d'image (19, 20, 21, 22) sur le côté opposé de la surface transmissive de diffusion (15) caractérisé par: une plaque-bouclier (16, 25) à rayures verticales disposé sur un côté de la surface transmissive de diffusion (15) adjacente aux moyens de source d'image (19, 20, 21, 22) pour projeter les images sur la surface transmissive de diffusion sous forme de feuilles chevauchantes intercalées.

2. Dispositif projecteur d'image selon la 1ère revendication, dont les moyens de source d'image (19, 20, 21, 22) comportent une série de sources d'image (20, 22) chacune projetant une image deux-dimensionnelle sur la surface transmissive de diffusion (15) dans une fourchette prédéterminée de longueur d'onde de lumière visuelle.

3. Dispositif projecteur d'image selon la 1ère revendication, dont les moyens de source d'image (19, 20, 21, 22) prévoient une série de sources d'image pour projeter des images monochromes bi-dimensionnelle sur la surface transmissive de diffusion (15) dans une fourchette prédéterminée de longueur d'onde de lumière visuelle, dont les images tri-dimensionnelles sont composées sur la surface transmissive de diffusion (15).

4. Dispositif projecteur d'image selon la 1ère revendication, dont les moyens de source d'image (19, 20, 21, 22) comportent une série de paires de trois sources d'image (31—42), chacune des trois sources d'image projetant en rouge, en vert et en bleu respectivement sur la surface transmissive de diffusion (15), des images tri-dimensionnelles étant composées sur la surface transmissive de diffusion (15).

5. Dispositif projecteur d'image selon la 2ème ou 4ème revendication, comportant également dont une lentille Fresnel (23) disposée à côté de la plaque-bouclier (16) du côté proche au moyens de source d'image.

6. Dispositif projecteur d'image selon la 2ème ou 4ème revendication, dont la plaque-bouclier (16) et la plaque de lentille lenticulaire (14) ont une interface en zig-zag de pas égal au pas des rayures sur la plaque-bouclier (16).

7. Dispositif projecteur d'image selon la 1ère revendication, dont les moyens de source d'image comportant une série de tubes de projection et de moyens à lentille pour focaliser les images produites par les tubes de projection d'image sur la surface de diffusion et au travers de la plaque-bouclier, ladite plaque-bouclier étant située pour assurer sur la surface de diffusion ses images depuis les tubes de projection d'images sous forme de rayures orientées en verticale avec des bandes d'image qui correspondent chacune aux tubes de projection d'image en cours d'inter-calage.

8. Dispositif projecteur d'image pour l'affichage des images tri-dimensionnelles y compris des moyens de source d'image (132—137) et des moyens d'affichage d'image (31), la source d'image assurant la projection optique d'image bi-dimensionnelle sur les moyens d'affichage d'image (131), lesquels comportent un substrat (138) apte à transmettre la lumière au travers et une couche fluorescente (140) disposée sur le substrat (138), caractérisé par: une plaque-bouclier (141) à distance et face à la couche fluorescente et disposée sur les moyens de source d'image, ayant une série d'orifices en rayures formées à l'intérieur.

9. Dispositif projecteur d'image selon la 8ème revendication, dont les moyens d'affichage d'image (131) comportent également une plaque lenticulaire à lentille disosée du côté opposé au substrat (138) par rapport aux moyens de source d'image (132—137).

EP 0 151 331 B1

FIG. 1    PRIOR ART

FIG. 2A
PRIOR ART

FIG. 2B
PRIOR ART

FIG. 3

1

FIG. 4

FIG. 5

FIG. 6

FIG. 7

FIG. 8A

FIG. 8B

FIG. 9

## FIG. 10

## FIG. 11

## FIG. 12

## FIG. 13

## FIG. 14A

## FIG. 14B